# FASCICULE DE BREVET EUROPEEN

(11) **EP 2 751 739 B1**
(45) Date de publication et mention de la délivrance du brevet: **04.03.2015**
(21) Numéro de dépôt: 12751531.0
(22) Date de dépôt: 30.08.2012
(51) Int. Cl.: G06K 9/00, G06T 7/00

(54) **DETECTION DE FRAUDE POUR SYSTEME DE CONTROLE D'ACCES DE TYPE BIOMETRIQUE**
BETRUGSERKENNUNG IN EINEM BIOMETRISCHEN ZUGANGSKONTROLLSYSTEM
DETECTION OF FRAUD FOR ACCESS CONTROL SYSTEM OF BIOMETRIC TYPE

(30) Priorité: 01.09.2011 FR 1157764
(43) Date de publication de la demande: 09.07.2014
(73) Titulaire: MORPHO, 92130 Issy-Les-Moulineaux (FR)
(72) Inventeur: BRANGOULO, Sébastien, F-92130 Issy-les-Moulineaux (FR); FEDUSAC, Thomas, F-92130 Issy-les-Moulineaux (FR)
(74) Mandataire: Regimbeau
(86) Numéro de dépôt international: PCT/EP2012/066919
(87) Numéro de publication internationale: WO 2013/030309

(56) Documents cités:
- EP-A2- 1 703 440
- QI LI ET AL: "A Binocular Framework for Face Liveness Verification under Unconstrained Localization", MACHINE LEARNING AND APPLICATIONS (ICMLA), 2010 NINTH INTERNATIONAL CONFERENCE ON, IEEE, 12 décembre 2010 (2010-12-12), pages 204-207, XP031900773, DOI: 10.1109/ICMLA.2010.37 ISBN: 978-1-4244-9211-4
- T Choudhury ET AL: "Multimodal person recognition using unconstrained audio and video", Proc. 2nd Conf. Audio- and Video-Based Biometric Person Authentication, 1 janvier 1999 (1999-01-01), pages 176-181, XP055024267, Extrait de l'Internet: URL:http://www.cs.columbia.edu/~jebara/pap ers/TR-472.pdf [extrait le 2012-04-11]
- EGNAL G ET AL: "Detecting binocular half-occlusions: empirical comparisons of five approaches", IEEE TRANSACTIONS ON PATTERN ANALYSIS AND MACHINE INTELLIGENCE, IEEE SERVICE CENTER, LOS ALAMITOS, CA, US, vol. 24, no. 8, 1 août 2002 (2002-08-01), pages 1127-1133, XP011094700, ISSN: 0162-8828, DOI: 10.1109/TPAMI.2002.1023808

## Description

### DOMAINE DE L'INVENTION

La présente invention concerne de manière générale le domaine de la reconnaissance biométrique et les systèmes de contrôle d'accès.

Elle propose en particulier un procédé et un système de détection de fraude pour système de contrôle d'accès, notamment du type mettant en oeuvre un traitement de reconnaissance sur des images de visage (reconnaissance faciale).

### ETAT DE LA TECHNIQUE

La reconnaissance faciale est couramment utilisée par des systèmes de contrôle d'accès, et est la plupart du temps mise en oeuvre en comparant une image d'un individu se présentant auprès du système de contrôle, à une image d'identité de l'individu figurant dans une base de données ou sur un document sécurisé porté par l'individu.

Cependant, les systèmes de contrôle d'accès par reconnaissance faciale actuels sont mis en échecs par différents types de fraude, la plus répandue étant appelée « attaque plane ».

Ce type d'attaque consiste, pour un individu, à présenter auprès du système de contrôle d'accès, un visage - ou une représentation d'un visage - d'une autre personne dont l'accès est autorisé.

Pour ce faire, l'individu présente généralement un support en deux dimensions, qui le plus souvent masque son visage, et sur lequel est imprimée une photographie du visage d'une autre personne.

De tels supports peuvent être en papier (une simple photographie imprimée), en tissu (port d'un vêtement sur lequel figure une impression de bonne qualité), ou même il peut s'agir de supports numériques, tels que par exemple des tablettes numériques sur lesquelles un individu charge une photo.

Dans ces cas, le système de contrôle d'accès met en oeuvre le processus d'identification à partir de la photographie et autorise l'accès de l'individu, ne détectant ainsi pas la fraude.

En outre, les méthodes de reconnaissance faciale peuvent également produire des erreurs même si l'individu ne cherche pas à commettre une fraude. Par exemple, un individu autorisé à entrer dans le lieu, mais portant un vêtement sur lequel une photographie de bonne qualité est imprimée, peut se voir interdire l'accès du lieu si la photographie est prise pour réaliser l'identification.

Des solutions ont été proposées pour corriger ces erreurs et détecter ce type d'attaque.

On connaît par exemple des solutions pour distinguer un vrai visage d'une photographie en détectant le clignement des yeux. De telles solutions sont par exemple développées dans le document « Eyeblink-based Anti-Spoofing in Face Recognition from a GenericWebcamera » (G. Pan, L. Sun, Z. Wu, S. Lao, iccv, pp.1-8, 2007 IEEE 11 th International Conférence on Computer Vision, 2007) et dans le document « Real-time eye blink detection with GPU-based SIFT tracking » (Lalonde, M., Byrns, D.; Gagnon, L.; Teasdale, N., Laurendeau, D., Canadian Conférence on Computer and Robot Vision - CRV , pp. 481-487, 2007).

Cependant, ces solutions ne sont pas toujours efficaces, puisque dans certains cas, la photographie doit être prise pendant un laps de temps donné, ou à une position de l'individu donnée. Le clignement des yeux, nécessaire à cette méthode, est donc statistiquement non garanti, d'autant plus que les personnes ont tendance à s'empêcher de cligner des yeux au moment de prendre une photographie.

Une méthode alternative par mesure de radiance du visage pris en photographie a aussi été proposée dans le document « Masked fake face détection using radiance measurements » (Y. Kim, J. Na, S. Yoon, J. Yi, J. Opt. Soc. Am. A/Vol. 26, No. 4/ April 2009), mais cette méthode dépend des matériaux supports utilisés en cas de fraude, elle n'est donc pas très fiable.

Enfin, une méthode par analyse spectrale de l'image peut également être tenue en échec en cas de fraude si la photographie employée pour la fraude est de suffisamment bonne qualité.

Le document de T. Choudhury et Al. : « Multimodal person recognition using unconstrained audio and video », Proc. 2nd Conf. Audio- and Video-Based Biometric Person Authentification, pages 176-181 décrit un procédé de modélisation en trois dimensions d'un visage, en estimant la profondeur d'un visage à modéliser à partir d'une vidéo.

### PRESENTATION DE L'INVENTION

En conséquence, un des buts de la présente invention est de proposer une solution permettant de détecter de façon plus fiable que l'art antérieur ce type de fraude.

Un autre but de la présente invention est de proposer une solution qui soit plus robuste également pour des fraudes de type « semi-planes », dans lesquelles l'image de visage présentée par un individu est courbée pour simuler le volume d'un visage.
À cet égard, l'invention propose une méthode de détection de fraude pour système de contrôle d'accès par reconnaissance biométrique, comprenant les étapes consistant à :
- prendre au moins deux images d'un visage présenté au système de contrôle d'accès par un individu selon au moins deux positions de l'individu devant le système de contrôle d'accès, ou deux angles de prise de vue de l'individu,
- extraire les visages des images,
- traiter ces deux images pour déterminer un score représentatif la planéité du visage apparaissant sur les images, et
- en fonction de ce score de planéité, détecter une éventuelle fraude de la part de l'individu, ladite détection conditionnant la mise en oeuvre d'un traitement d'identification de l'individu par le système de contrôle d'accès
le procédé étant caractérisé en ce que l'étape de détermination d'un score représentatif de la planéité du visage comprend les étapes consistant à :
- réaliser une carte des profondeurs du visage de l'individu (I), estimer un plan moyen de ladite carte, et calculer la variance des points de la carte par rapport audit plan moyen,
- isoler des images un pavé du visage centré sur le nez de l'individu, réaliser une carte des profondeurs dudit pavé, estimer un plan moyen de ladite carte, et calculer la variance des points de la carte par rapport à son plan moyen, et
- obtenir un score de planéité du visage par combinaison linéaire des variances des points des cartes de profondeur par rapport à leur plan moyen respectif.
La méthode de reconnaissance faciale proposée par l'invention peut en outre comprendre au moins l'une des caractéristiques suivantes :
- dans ce cas, elle comprend en outre une étape de normalisation de la carte des profondeurs afin qu'elle soit indépendante des angles de prises de vue des images du visage de l'individu.

L'invention concerne également un système de contrôle d'accès reconnaissance biométrique adapté pour mettre en oeuvre la méthode de détection de fraudes, et comprenant :
- un ou plusieurs systèmes d'acquisition adaptés pour capturer au moins deux images du visage présenté par un individu selon au moins deux positions ou angles de vue de l'individu relativement au système d'acquisition, et
- une plateforme de calcul, à laquelle sont envoyées des images par le système d'acquisition, la plateforme de calcul étant adaptée pour traiter ces deux images pour déterminer un score représentatif la planéité du visage apparaissant sur les images, et pour
   o isoler des images un pavé du visage centré sur le nez de l'individu,
   o réaliser une carte des profondeurs du visage de l'individu (I) et du pavé centré sur le nez de l'individu,
   o estimer, pour chaque carte, un plan moyen de ladite carte,
   o calculer la variance des points de chaque carte par rapport à son plan moyen, et
      o calculer un score de planéité du visage par combinaison linéaire des variances des points des cartes de profondeur par rapport à leur plan moyen respectif, et
- à partir du score représentatif de la planéité du visage, détecter une éventuelle fraude de la part de l'individu, ladite détection conditionnant l'identification de l'individu par analyse biométrique de son visage.

### DESCRIPTION DES FIGURES

D'autres caractéristiques, buts et avantages de la présente invention apparaîtront à la lecture de la description détaillée qui va suivre, au regard des figures annexées, données à titre d'exemples non limitatifs et sur lesquelles :
- la figure 1 un exemple de système de contrôle d'accès pouvant mettre en oeuvre une méthode de détection de fraudes,
- la figure 2 représente schématiquement le système de contrôle d'accès par reconnaissance biométrique,
- la figure 3 représente les principales étapes de la méthode de détection de fraude,
- les figures 4a à 4d représentent différents modes de réalisation de l'étape d'évaluation de la planéité d'un visage mis en oeuvre dans la méthode de détection de fraude.

### DESCRIPTION DETAILLEE DE MODES DE MISE EN OEUVRE ET DE REALISATION DE L'INVENTION

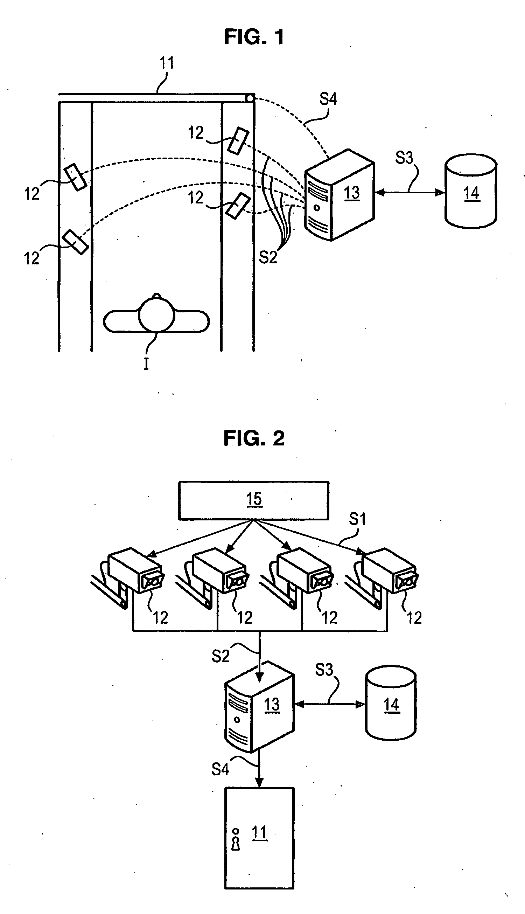

Sur les figures 1 et 2, est représenté un système de contrôle d'accès. Il peut être disposé à l'entrée de tout endroit dont l'accès est contrôlé, et notamment dans lequel seules certaines personnes disposant d'une autorisation peuvent entrer. Les personnes voulant accéder à cet endroit doivent donc procéder à une identification, par exemple par reconnaissance faciale, ou par reconnaissance d'autres critères biométriques (iris, empreintes digitales etc.).

Dans le cas représenté, le système contrôle l'ouverture d'une porte 11 permettant par exemple l'accès à une zone sécurisée. Il comprend un système d'acquisition 12, comportant en l'occurrence quatre caméras 12A à 12D, qui permettent d'acquérir des images S2 d'un individu se présentant devant le système, selon différentes positions et différents angles de vue. Un module de synchronisation 15 transmet aux caméras 12A à 12D un signal de synchronisation S1 permettant de lancer les acquisitions simultanément.

Le système de contrôle d'accès comprend en outre une plateforme de calcul 13, à laquelle sont envoyées les images S2, et qui procède au traitement de ces images pour détecter une éventuelle fraude. Il comprend également une base de données 14, qui stocke des images (images S3) des visages des individus autorisés à franchir le système de contrôle, afin de comparer ces images aux images acquises et de réaliser à partir de cette comparaison l'identification de l'individu

### Détection de fraude

Lorsqu'un individu I se présente auprès du système de contrôle d'accès, un ou plusieurs systèmes d'acquisition 12 capturent au moins deux images du visage présenté par l'individu au cours d'une étape 100 d'acquisition.

Les images S2 ainsi acquises sont ensuite transmises par les systèmes d'acquisition 12 à la plateforme de calcul 13, au cours d'une étape 200 de transmission. De préférence, les images S2 sont acquises en format numérique, et transférées par une connexion classique, filaire ou non.

La plateforme de calcul 13 met ensuite le cas échéant en oeuvre une opération de traitement 210 telle qu'un codage ou une compression des images selon un format préféré, ou encore une sélection de deux images ou plus.

Puis, au cours de deux étapes 300 et 400, la plateforme de calcul 13 met en oeuvre sur au moins deux des images reçues et sélectionnées, un traitement de détection de fraude. Le principe de ce traitement consiste à évaluer la planéité du visage apparaissant sur les images et à considérer qu'il y a fraude lorsque ce visage ne présente pas de volume et est plan ou semi-plan (cas d'une feuille courbée sur elle-même, par exemple). En effet, si un individu I présente aux caméras un support d'image en deux dimensions représentant un autre visage, la planéité du visage ainsi détectée est plus importante que la planéité d'un visage en trois dimensions. Ceci permet de différencier un visage illustré sur un support plan (attaque plane) et un vrai visage.

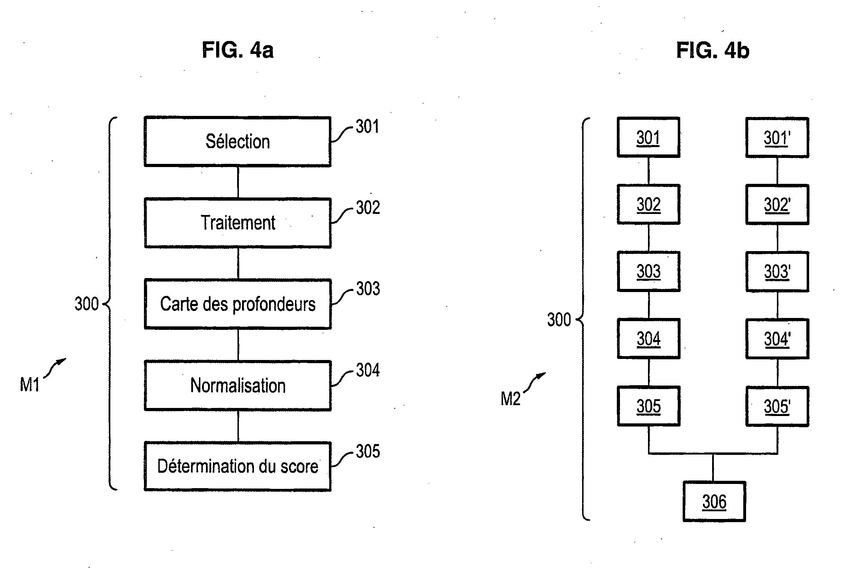

Ainsi, la plateforme 13 calcule un score de planéité (étape 300) et compare le score de planéité obtenu à un score seuil préétabli (étape 400). Différentes méthodes possibles pour le calcul d'un score de planéité sont décrites dans la suite du texte en référence aux figures 4a à 4d. Le score seuil peut quant à lui être ajusté en fonction du taux de succès de détections de fraude que l'on souhaite.

À la suite des étapes 300 et 400, lorsque la plateforme de calcul 13 n'a pas détecté de fraude, elle procède à traitement en vue de l'identification de l'individu I (étape 500). À cet effet, la plateforme confronte au moins une des images acquises à un ensemble d'images S3 présentes dans la base de données. Alternativement le système de contrôle d'accès peut confronter les images acquises par les caméras 12A à 12D à celle d'un document d'identité présenté par l'individu.

De nombreux traitements de comparaison d'images et d'identification sont bien entendu possibles. Pour des exemples de mises en oeuvre, on pourra par exemple se référer aux publications suivantes :
- Face recognition: « Features versus Templates » (R. Brunelli, T. Poggio, IEEE Transactions on Pattern analysis and feature intelligence, Vol. 15, No. 10, October 1993)
- Pose-Robust Recognition of Low-Resolution Face Images, Soma Biswas, Gaurav Aggarwal and Patrick J. Flynn, Department of Computer Science and Engineering, University of Notre Dame, Notre Dame, CVPR2011.
- A Deformation and Lighting Insensitive Metric for Face Recognition Based on Dense Correspondences, Anne Jorstad, David Jacobs, Alain Trouvé, CVPR2011.

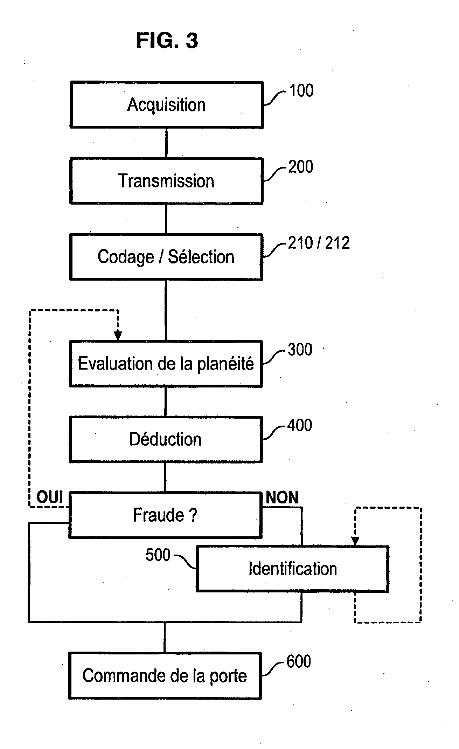

La plateforme de calcul 13 envoie ensuite un ordre S4 d'ouverture ou de blocage de la porte si l'individu I identifié correspond respectivement à une personne autorisée à entrer ou non au cours d'une étape 600 de commande de la porte. Si l'individu I ne correspond pas à une personne autorisée à entrer, la plateforme de calcul 13 peut réitérer l'étape d'identification (identifié sur la figure 3 par une flèche en pointillés), ou déclencher un signal d'alarme.

En revanche si la plateforme de calcul 13 a détecté une fraude, elle envoie directement un ordre de blocage à la porte 11 au cours de l'étape 600.

Elle peut en outre déclencher un signal d'alarme ou procéder une nouvelle fois (comme indiqué par une flèche en pointillés) aux étapes 300 d'évaluation de la planéité du visage pour la détection d'une fraude.

Optionnellement, l'étape de codage et de sélection 210/212 des images S2 peut être réalisée par le ou les systèmes d'acquisition avant l'étape de transmission des images 200 (alternative non représentée dans les figures).

On va maintenant décrire différents exemples de calcul de score de planéité possibles.

### Méthodes par calcul de la variance d'un volume

En référence à la figure 4a, une première méthode M1 de calcul de planéité met en oeuvre une première étape 301 consistant à sélectionner parmi les images S2 prises par les systèmes d'acquisition 12 et transmises à la plateforme de calcul 13, les images du visage présenté par l'individu. Ces images doivent présenter une résolution minimum de l'ordre du centimètre ou du demi-centimètre. En outre, elles sont de préférence prises au même moment par deux systèmes d'acquisition 12 situés respectivement sur les côtés gauche et droit de l'individu **I,** Il est néanmoins préférable que les systèmes d'acquisition 12 procèdent à l'acquisition du visage de l'individu I avec un angle compris entre 0 et 90° par rapport à l'axe des du regard.

La plateforme de calcul 13 réalise ensuite un traitement préliminaire au cours d'une étape 302 des images sélectionnées pour procéder à la détection de la fraude. Le traitement consiste à extraire le visage des images sélectionnées, et le cas échéant à isoler une seule partie dont la planéité est ensuite évaluée.

Les parties pertinentes à isoler, comme par exemple la région du nez, de la bouche, ou des yeux, peuvent être définies de manière sémantique. Des algorithmes permettant d'isoler certaines parties du visage sont décrits dans les documents suivants :
- 3D Probabilistic Feature Point Model for Object Detection and Recognition, Sami Romdhani, Thomas Vetter, University of Basel, Computer Science Department, Bernoullistrasse 16, CH - 4056 Basel, Switzerland.
- Multiple Kernel Learning SVM and Statistical Validation for Facial Landmark Detection, Vincent RAPP, Thibaud SENECHAL, Kevin BAILLY, Lionel PREVOST.

Les étapes de sélection et de traitement peuvent être inversées, de sorte que la plateforme de calcul extraie les visages des images S2 avant de sélectionner la paire de visage à traiter, et éventuellement la partie du visage dont on mesure la planéité.

Une fois les images sélectionnées, la plateforme 13 calcule, dans une étape 303, une carte des profondeurs de la partie du visage sélectionnée.

De préférence, il s'agit d'une partie du visage centrée en largeur sur le nez et s'étendant entre les oreilles, et dont un tiers en hauteur est situé au-dessus du nez, et les deux-tiers restant sont situées sous le nez de l'individu.

En effet, c'est la zone du visage présentant en général la moindre planéité, c'est-à-dire que c'est la zone du visage présentant le plus de reliefs, en densité comme en valeur absolue.

Alternativement la partie du visage peut être un pavé centré sur le nez de l'individu I.

Pour réaliser la carte des profondeurs de la partie du visage, la plateforme de calcul 13 recrée la partie du visage considérée selon toute méthode connue de reconstitution en trois dimensions à partir de la stéréovision.

Par exemple elle met en correspondance des points communs aux deux images, et à partir de cette mise en correspondance, elle met en place une métrique qui mesure la disparité entre deux points correspondants. Cette disparité est représentative du volume de la partie du visage étudiée.

Plusieurs méthodes de mise en correspondance peuvent être mises en oeuvre. Selon une première méthode, de correspondance « creuse », seuls certains points des images sont sélectionnés et mis en correspondance. Suivant cette méthode, la plateforme de calcul 13 peut par exemple mettre en oeuvre l'algorithme suivant :
- Recherche automatique de points d'intérêt sur les deux images, basée par exemple sur des informations de gradient ou de couleur,
- Calcul de descripteurs associés à chaque point d'intérêt ;
- Établissement d'une métrique M(x,y), et recherche de couples de points (i,j) entre les deux images dont les descripteurs (d(i), d(j)) présentent de bons scores M(d(i), d(j)) - par exemple dont le score est supérieur à un seuil prédéterminé, défini statistiquement à partir d'une base d'apprentissage. Un point d'une première image ne peut être associé qu'à un point au maximum de la seconde image. En revanche, un point de la première image peut ne pas appartenir à un couple, si aucun point de la seconde image ne permet de valider un score M(d(i), d(j)).
- La détermination de la métrique est telle que le calcul de ces scores est représentatif de la distance entre les points, qui permet d'obtenir une estimation du volume de la carte des profondeurs.

Alternativement, la plateforme de calcul peut mettre en oeuvre une méthode de mise en correspondance dense, en utilisant par exemple l'algorithme suivant :
- à chaque point i de coordonnées (x1,y1) de la première image est associé un point j de coordonnées (x2, y2) dans la seconde image.
- La carte de profondeur est ensuite calculée en déterminant les distances (par exemple en utilisant la distance euclidienne) pour chaque couple de points (i,j).

En outre, pour plus de détails sur les méthodes de reconstitution en trois dimensions, on pourra se référer à la publication « Multi-View Stereo Reconstruction and Scene Flow, Estimation with a Global Image-Based Matching Score », (Pons, Keriven et Faugeras, Kluwer Academic Publishers, 2005).

Puis, au cours d'une étape suivante 304, la plateforme de calcul 13 normalise la carte des profondeurs pour que celle-ci soit indépendante de l'angle du visage de l'individu sur les images par rapport au système d'acquisition 12. Cette étape est néanmoins optionnelle.

Enfin, au cours d'une étape 305, la plateforme de calcul établit un score P1 représentatif de la planéité de la partie du visage étudiée, en calculant la variance du volume du visage par rapport à un plan moyen de celui-ci. Pour ce faire, on détermine un plan moyen de la carte des profondeurs représentée dans l'espace en trois dimensions, et on calcule la variance de chacun des points de la carte, par une mesure de la distance en trois dimensions, par rapport à ce plan moyen. Le score de planéité P1 est la variance calculée.

### Variante sur un couple de volumes

Une deuxième méthode de reconnaissance faciale M2, dont les étapes sont illustrées en figure 4b, reprend les principales étapes de la première M1.

Elle consiste à appliquer :
- d'une part les étapes 301 à 305 de la méthode M1 le visage complet de l'individu ou une partie de celui-ci, par exemple sur une partie du visage centrée en largeur sur le nez et s'étendant entre les oreilles, et dont un tiers en hauteur est situé au-dessus du nez, et les deux-tiers restant sont situées sous le nez de l'individu, pour obtenir un premier score P1, et
- d'autre part les étapes 301' à 305' de la méthode M1 sur un pavé centré sur une partie du visage, par exemple le nez de la personne, pour obtenir un deuxième score P2. En particulier, l'étape 301' de sélection des visages dans les images est effectuée sur les mêmes images S2 que l'étape 301, et elle consiste en outre à isoler le pavé centré sur le nez de la personne, selon les méthodes décrites ci-avant.
Enfin, au cours d'une étape 306 on détermine un score P3 à partir des scores P1 et P2. Par exemple, le score P3 peut être une combinaison linéaire de P1 et P2 de type P3 = P1 + λP2. Le score P3 prend en compte à la fois le volume et la planéité d'ensemble du visage, donnés par le score P1, et également le volume supplémentaire et la protubérance du nez, donnés par le score P2.

Cette méthode peut également être mise en oeuvre en isolant plusieurs parties du visage, et en calculant pour chacune de ces parties des scores P2', P2", P2'" etc.

Dans ce cas le score P3 déterminé au cours de l'étape 306 est calculé à partir des scores P1, P2', P2", P2"', par exemple au moyen d'une combinaison linéaire de ces scores ; P3 = κ P1 + λ P2' + µ P2" + v P2"'.

Les facteurs κ, λ, µ, et v, sont quant à eux prédéterminés au cours de tests réalisés sur une base d'apprentissage pour optimiser les résultats liés à l'utilisation du score.

Cette deuxième méthode M2 est particulièrement pertinente pour lutter contre des attaques « semi-planes ».

En effet, en cas d'attaque « semi-plane », une personne peut porter une photo courbée sur son visage, si bien que le volume délimité par la photo peut présenter un volume similaire à celui d'un visage.

Cependant, courber une photographie ne permet pas de copier le volume du nez d'une personne, car celui-ci forme toujours une protubérance par rapport au reste du visage. Cette méthode d'évaluation de la planéité, comprenant l'évaluation générale de la planéité du visage, additionnée du volume représenté par le nez d'une personne, permet donc de résister à la fois aux attaques planes et semi-planes.

### Méthode par comparaison de points d'intérêt

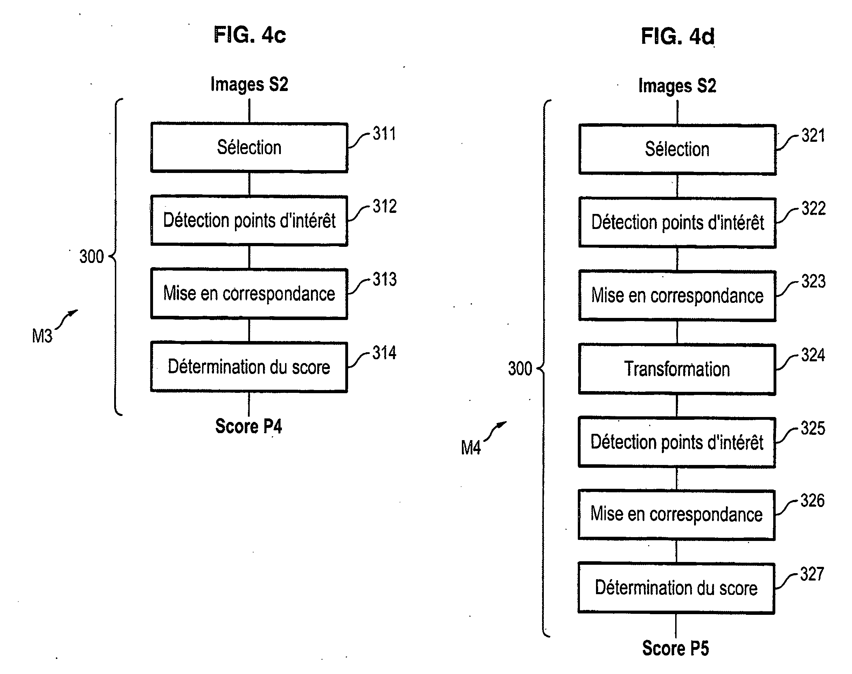

Sur la figure 4c est représentée une troisième méthode M3 d'évaluation de la planéité d'un visage.

Cette méthode M3 requiert d'utiliser deux photographies prises de préférence respectivement à gauche et à droite du visage de l'individu I, et au même moment. Alternativement si le système de contrôle d'accès est dans un sas à l'entrée d'un lieu sécurisé, dans lequel progresse l'individu I, un même système d'acquisition peut prendre deux images à deux instants différents, la distance de l'individu et l'angle de prise de vue du système d'acquisition étant différents entre les deux images.

Au cours d'une première étape 311, la plateforme de calcul 13, à laquelle ont été transférées les deux images S2, sélectionne les images sur lesquelles le traitement est mis en oeuvre, et extrait de ces images le visage de l'individu. Cette étape est analogue à l'étape 301 évoquée ci-avant.

Puis la plateforme de calcul 13 détermine au cours d'une étape 312, sur chacune des images, des points d'intérêts des visages, typiquement au moyen de descripteurs robustes aux images.

Par exemple, les points d'intérêt sont déterminés en calculant des descripteurs de type SIFT (scale-invariant feature transform), c'est-à-dire en des descripteurs invariants par rapport à l'échelle et par rapport à l'image. D'autres méthodes de détection de points d'intérêt sont décrites dans la publication « *3D Probabilistic Feature Point Model for Object Detection and Recognition* » (Sami Romdhani, Thomas Vetter).

Grâce aux descripteurs invariants par rapport à l'échelle, on peut, sur deux images différentes, retrouver des points d'intérêts correspondants.

Or, si les images sont prises respectivement à gauche et à droite de l'individu I, à cause du relief du visage certains points d'intérêt ne seront visibles que sur une seule des deux images : c'est le cas, en fonction de l'angle de prise de vue, pour certaines parties des yeux, de la bouche, ou certains points caractéristiques de la peau tels que des grains de beauté.

En revanche, si l'individu porte une photographie, même courbée, aucun relief ne masque les points d'intérêt du visage illustré sur la photographie.

On utilise ce phénomène, sur des images non frontales, pour évaluer la planéité du visage dont l'image est prise : au cours d'une étape 313 de comparaison, on compare les deux images pour déterminer quels sont les points d'intérêt communs aux deux et quels sont les points d'intérêt qui n'apparaissent que sur l'une des deux images. Pour cette étape, la plateforme de calcul peut mettre en oeuvre l'un ou l'autre des algorithmes de mise en correspondance denses, ou creuses décrits ci-avant.

Puis, au cours d'une étape 314, la plateforme de calcul 12 détermine un score P4, représentatif de la planéité du visage figurant sur l'image, à partir du nombre de point d'intérêt communs.

Ce score P4 est calculé en divisant le nombre de points d'intérêt communs aux deux images, par un nombre qui peut être le nombre minimum, maximum, ou moyen de points d'intérêt entre les deux images.

Moins le visage figurant sur l'image a de relief, et plus le score P4 est important. Par conséquent, en itérant cette méthode un nombre suffisant de fois sur des images d'une base de données connue, on peut déterminer un score P4 formant un seuil au-dessus duquel on détecte avec certitude une fraude.

### Méthode par transformation et superposition d'images

Sur la figure 4d est représentée une quatrième méthode M4 permettant d'évaluer la planéité d'un visage pour détecter une fraude.

Pour réaliser cette méthode M4, on utilise de préférence des images S2 qui sont soit prises de face par rapport au visage de l'individu, soit respectivement à gauche et à droite du visage de l'individu, avec des angles de vue symétriques.

Au cours d'une première étape 321, la plateforme 13 effectue une sélection des visages sur les images S2 transmise par les systèmes d'acquisition 12, de manière analogue à l'étape 201.

Puis, au cours d'une étape 322, la plateforme 13 détermine des points d'intérêt dans les deux images, de la même manière qu'au cours de l'étape 312 précédemment décrite.

La plateforme de calcul 13 met ensuite en correspondance les points d'intérêt identifiés au cours d'une étape 323 analogue à l'étape 313, et ce avant d'effectuer, sur l'une des deux images S2, au cours d'une étape 324, une transformation de type affine ou quadratique par exemple, avec des paramètres déterminés par des méthodes classiques d'algèbre linéaire, à partir des couples de points mis en correspondance au cours de l'étape 323.

Les paramètres sont calculés afin de supprimer les différences entre les images générées par les différences de prises de vue. Dans ce cas, l'image transformée est plus proche de l'image à laquelle elle est comparée dans le cas d'une image plane que dans celui d'un volume en trois dimensions, puisque les informations figurant sur les deux images sont différentes dans ce dernier cas.

Au cours de l'étape suivante 325, la plateforme de calcul 12 détermine des points d'intérêt sur les deux images, dont l'une a été préalablement transformée, selon la même méthode qu'au cours de l'étape 322 décrite précédemment.

Enfin, au cours de l'étape suivante 326, la plate-forme met en correspondance les points d'intérêt des deux images, et détermine une mesure de disparité au cours d'une étape 327 entre ces points d'intérêt. Cette mesure représente un score de planéité P5.
En effet, dans le cas d'une image plane, les deux images concordent après la transformation, et les disparités entre les points d'intérêt sont bien plus réduites que celles d'images provenant d'un volume.

Enfin, il est également possible d'implémenter les différentes méthodes pour obtenir les scores respectifs, et à partir de ces scores en déduire un dernier score P6 de planéité. Ce score peut être une combinaison linéaire ou une moyenne des scores de planéité P1 à P5, ce qui permet de rendre le résultat final plus robuste.

## Revendications

1. Méthode da détection de fraude pour système de contrôle d'accès par roconnaissance biométrique, comprenant les étapes consistant à :
- prendre au moins deux images (S2) d'un visage présenté au système de contrôle d'accés par un individu (I) selon au moins deux positions de l'individu devant le système de contrôle d'accès, ou deux angles de prise de vue dè l'individu,
- extraire les visages des images,
- taiter ces deux images pour déterminer un score representatif de la planéite du visage apparaissant sur les images, et
- en fonction de ce score de planéité, détecter une éventuelle fraude de la part de l'individu, ladite détection conditionnant la mise en oeuvre d'un traitement d'identification de l'individu par le systeme de contrôle d'acces,
le procédé étant **caractérisé en ce que** l'étape de détermination d'un score représentatif de la planéité du visage comprend les étapes consistant à :
réaliser une carte des profondeurs du visage de l'individu (I) moyen de ladite carte, et calculer la variance des points de la carte par rapport audit plan moyen,
- isoler des mages un pavé du visage centre sur le nez de l'individu, réaliser une carte des profondeurs dudit pavé, estimer un plan moyen de ladite carte, et calculer la variance des points de la carte par rapport à son plan moyen et
- obtenir un score de planéité du visage par combinaison linéaire des variances des points des cartes de profondeur par rapport à leur plan moyen respectif.

2. Méthode selon la revendication 1, comprenant en outre une étape de normalisation de chaque carte des profondeurs afin qu'elle soit indépendante des angles de prises de vue des images du visage de l'individu.

3. Système de contrôle d'accès par reconnaissance biométrique, camprenant :
- un ou plusieurs systèmes d'acquisition (12), adaptés pour capturer au moins deux images du visage présenté par un individu (I) selon au moins deux positions ou angles de vue de l'individu relativement au système d'acquisition (12), et
- une plateforme de calcul (13), à laquelle sont envoyées des images (S2) par le système d'acquisition (12), la plateforme de calcul (13) étant adaptée pour traiter ces deux images pour déterminer un score représentatif de la planéité du visage apparaissant sur les images, et pour
o isoler des images un pavé du visage centré sur le nez de l'individu,
o réaliser une carte des profondeurs du visage de l'individu (I) et du pavé centré sur le nez de l'individu,
o estimer, pour chaque carte, un plan moyen de ladite carte,
∘ calculer la variance des points de chaque carte par rapport à son plan moyen, et
∘ calculer un score de planéité du visage par combinaison linéaire des variances des points des cartes de profondeur par rapport à leur plan moyen respectif, et
- à partir du score représentatif de la planéité du visage, détecter une éventuelle fraude de la part de l'individu, ladite détection conditionnant l'identification de l'individu par analyse biométrique de son visage.

4. Système de contrôle d'accès selon la revendication précédente, ledit système étant disposé en amont d'une porte (11) d'accès régulé, et la plateforme de calcul (13) étant adaptée pour commander l'ouverture de la porte, et dans lequel la détection de fraude et l'identification de l'individu conditionnent l'ouverture de la porte (11).

## Patentansprüche

1. Verfahren zur Betrugsdetektion für ein Zugangskontrollsystem durch biometrische Erkennung, umfassend die Schritte:
- Aufnehmen von wenigstens zwei Bildern (S2) eines dem Zugangskontrollsystem durch eine Person (I) vorgezeigten Gesichts gemäß wenigstens zwei Positionen der Person vor dem Zugangskontrollsystem oder zwei Bildaufnahmewinkeln der Person,
- Extrahieren der Gesichter aus den Bildern,
- Verarbeiten dieser zwei Bilder um einen für die Ebenheit des auf den Bildern auftauchenden Gesichts repräsentativen Score zu bestimmen und
- In Abhängigkeit dieses Ebenheitsscores, Detektieren eines etwaigen Betrugs durch die Person, wobei die Detektion die Ausführung einer Identifizierungsverarbeitung der Person durch das Zugangskontrollsystem auslöst,
**dadurch gekennzeichnet, dass** der Schritt der Bestimmung eines für die Ebenheit des Gesichts repräsentativen Scores die folgenden Schritte umfasst:
- Erstellen einer Tiefenkarte des Gesichts der Person (I), Bestimmen einer mittleren Ebene der Karte und Berechnen der Varianz der Punkte der Karte bezüglich dessen mittlerer Ebene,
- Isolieren eines auf die Nase der Person zentrierten Ausschnitts des Gesichts aus den Bildern, Erstellen einer Tiefenkarte des Ausschnitts, Bestimmen einer mittleren Ebene der Karte und Berechnen der Varianz der Punkte der Karte bezüglich ihrer mittleren Ebene, und
- Erhalten eines Ebenheitsscores des Gesichts durch Linearkombination der Varianzen der Punkte der Tiefenkarten bezüglich ihrer jeweiligen mittleren Ebene.

2. Verfahren gemäß Anspruch 1, ferner umfassend einen Schritt des Normalisierens jeder Tiefenkarte, damit sie unabhängig von den Bildaufnahmewinkeln der Bilder des Gesichts der Person ist.

3. Zugangskontrollsystem durch biometrische Erkennung, umfassend:
- Ein oder mehrere Aufnahmesysteme (12), dazu ausgestaltet wenigstens zwei Bilder des durch eine Person (I) vorgezeigten Gesichts aufzunehmen gemäß wenigstens zwei Positionen oder Blickwinkeln der Person bezüglich des Aufnahmesystems (12), und
- Eine Rechenplattform (13), an welche die Bilder (S2) durch das Aufnahmesystem (12) gesendet werden, wobei die Rechenplattform dazu ausgestaltet ist, diese zwei Bilder zu verarbeiten um einen für die Ebenheit des auf den Bildern auftauchenden Gesichts repräsentativen Score zu bestimmen und dazu
o einen auf die Nase der Person zentrierten Ausschnitt des Gesichts aus den Bildern zu isolieren,
o eine Tiefenkarte des Gesichts der Person (I) und des auf die Nase der Person zentrierten Ausschnitts zu erstellen,
o für jede Karte eine mittlere Ebene der Karte zu bestimmen, o die Varianz der Punkte jeder Karte bezüglich ihrer mittleren Ebene zu berechnen, und
o einen Ebenheitsscore des Gesichts durch Linearkombination der Varianzen der Punkte der Tiefenkarten bezüglich ihrer jeweiligen mittleren Ebene zu berechnen, und
- Ausgehend von dem für die Ebenheit des Gesichts repräsentativen Score, Detektieren eines etwaigen Betrugs durch die Person, wobei die Detektion die Identifizierung der Person durch biometrische Analyse ihres Gesichts auslöst.

4. Zugangskontrollsystem gemäß des vorstehenden Anspruchs, wobei das System vor einer Tür (11) mit geregeltem Zugang angeordnet ist und die Rechenplattform (13) dazu ausgestaltet ist, die Öffnung der Tür zu steuern, und in welchem die Betrugsdetektion und die Identifizierung der Person die Öffnung der Tür (11) auslösen.

## Claims

1. A method of fraud detection for access control system via biometric recognition, comprising the steps consisting of:
- taking at least two images (S2) of a face presented to the access control system by an individual (I) according to at least two positions of the individual in front of the access control system, or two angles of vision of the individual,
- extracting the faces from the images,
- processing these two images to determine a score representative of the flatness of the face appearing on the images, and
- as a function of this flatness score, detecting any fraud on the part of the individual, said detection conditioning the use of an identification processing of the individual by the access control system,
the method being **characterized in that** the step of determining a score representative of the flatness of the face comprises the steps consisting of:
- making a depth map of the face of the individual (I), estimating a median plane of said map, and calculating the variance of points of the map relative to said median plane,
- isolating from the images a block of the face centred on the nose of the individual, making a depth map of said block, estimating a median plane of said map, and calculating the variance in points of the map relative to its median plane, and
- obtaining a flatness score of the face by linear combination of the variances in points of the depth maps relative to their respective median plane.

2. The method according to claim 1, further comprising a standardisation step of each depth map so that it is independent of the angles of vision of the images of the face of the individual.

3. An access control system via biometric recognition, comprising:
- one or more acquisition systems (12) adapted to capture at least two images of the face presented by an individual (I) according to at least two positions or viewing angles of the individual relative to the acquisition system (12), and
- a calculation platform (13) to which are sent images (S2) by the acquisition system (12), the calculation platform (13) being adapted to process these two images to determine a score representative of the flatness of the face appearing on the images, and for
∘ isolating from the images a block of the face centred on the nose of the individual,
o making a depth map of the face of the individual (I) and of the block centred on the nose of the individual
o estimating, for each map, a median plane of said map,
o calculating the variance in points of each map relative to its median plane, and
o calculating a flatness score of the face by linear combination of the variances in points of the depth maps relative to their respective median plane, and
- from the score representative of the flatness of the face, detecting any fraud on the part of the individual, said detection conditioning the identification of the individual via biometric analysis of his face.

4. The access control system according to the preceding claim, said system being arranged upstream of a regulated access door (11), and the calculation platform (13) being adapted to control the opening of the door, and wherein fraud detection and identification of the individual condition opening of the door (11).
